# EUROPÄISCHE PATENTANMELDUNG

(11) **EP 1 600 649 A1**
(43) Veröffentlichungstag der Anmeldung: **30.11.2005**
(21) Anmeldenummer: 04012300.2
(22) Anmeldetag: 25.05.2004
(51) Int. Cl.: F16D 25/10

(54) **Antriebseinrichtung**

(71) Anmelder: BorgWarner Inc., Auburn Hills MI 48326 (US)
(72) Erfinder: Ebinger, Günter, 76684 Ostringen (DE); Heber, Klaus, 71686 Remseck (DE); Götz, Nicklas, 67346 Speyer (DE); Wehle, Andreas, 69226 Nussloch (DE)
(74) Vertreter: Neunert, Peter Andreas

(57) **Zusammenfassung**

Die Erfindung betrifft eine Antriebseinrichtung (1) mit einer Antriebswelle (5), mit zwei koaxial zu der Antriebswelle (5) angeordneten Getriebeeingangswellen (6, 7) eines Getriebes (G) und mit einer mittels einer elektro-hydraulischen Ansteuereinheit (2) hydraulisch ansteuerbaren Doppelkupplung (3), mit welcher die Antriebswelle (5) schaltbar mit wenigstens einer der Getriebeeingangswellen (6, 7) verbindbar ist. Erfindungsgemäß ist vorgesehen, dass die Ansteuereinheit (2) axial benachbart zu der Doppelkupplung (3) angeordnet ist.

## Beschreibung

Die Erfindung betrifft eine Antriebseinrichtung gemäß dem Oberbegriff des Patentanspruchs 1.

Automatische Doppelkupplungsgetriebe, wie sie beispielsweise in der EP 1 195 537 B1 und der europäischen Patentanmeldung No. 03023013.0, in der DE 199 21 687 A1 oder in der DE 198 21 164 A1 beschrieben sind, umfassen eine Antriebswelle, zwei koaxial zu der Antriebswelle angeordneten Getriebeeingangswellen und eine hydraulisch betätigbare Doppelkupplung, mit welcher die Antriebswelle schaltbar mit wenigstens einer der Getriebeeingangswellen verbindbar ist. Die entsprechende Doppelkupplung ist jeweils mittels einer elektro-hydraulischen Ansteuereinheit ansteuerbar.

Es ist bekannt, die Ansteuereinheit vollständig getrennt von der Doppelkupplung anzuordnen. So ist beispielsweise die Ansteuereinheit für das Doppelkupplungsgetriebe DSG von Volkswagen seitlich am bzw. in Fahrtrichtung gesehen vor dem Getriebegehäuse angeordnet. Hydraulikflüssigkeitskanäle führen durch das Getriebegehäuse zu einer in dieses eingepressten Hydraulikflüssigkeitsübergabeeinrichtung, welche in der englischen Fachsprache auch als "Oilsleeve" bezeichnet wird.

Aus der DE 199 21 687 A1 ist es bekannt, die erforderliche elektro-hydraulische Ansteuereinheit mit Ölpumpe, Schieberkasten, Elektromagnetventilen und Hydraulikschieber hinter der Doppelkupplung und radial nach außen versetzt anzuordnen. Die Hydraulikflüssigkeitszuführung erfolgt über ein Getriebegehäuse in eine Durchführung, welche in der englischen Fachsprache auch unter der Bezeichnung "support" bekannt ist, und so in die Doppelkupplung.

In Stufenautomatikgetrieben, wie z.B. ZF 5HP30 oder W5A180 von DaimlerChrysler, ist eine Anordnung bekannt, bei welcher ein Drehmomentwandler in einer Aufnahme sitzt, welche Hydropumpen und Druckregler für diese beinhaltet, jedoch keine elektrische Kupplungsaktuatorik.

Obwohl sich die vorstehend beschriebenen Anordnungen der elektro-hydraulischen Ansteuereinheit in Bezug auf die jeweiligen Doppelkupplungen dem Grunde nach bewährt haben, besteht der Bedarf, einerseits den Bauraum weiter zu verkleinern und die Kopplung zwischen elektro-hydraulischer Ansteuereinheit und Doppelkupplung weiter zu vereinfachen.

Diese Aufgabe wird bei einer gattungsgemäßen Antriebseinrichtung mit vorstehend beschriebener Doppelkupplung und elektro-hydraulischer Ansteuereinheit durch die Merkmale des kennzeichnenden Teils des Patentanspruchs 1 gelöst.

Vorteilhafte Ausführungen und Weiterbildungen der Erfindung sind in den Unteransprüchen angegeben.

Bei einer gattungsgemäßen Antriebseinrichtung ist demnach erfindungsgemäß vorgesehen, dass die Ansteuereinheit axial benachbart zu der Doppelkupplung angeordnet ist.

Der Vorteil eines dergestaltigen Systems besteht darin , dass die Hydraulikflüssigkeitsflüsse (Ölflüsse) nicht über ein weiteres Bauteil, wie z.B. ein Getriebegehäuse, geführt werden müssen, wodurch Bauraum (benötigter Platz) und Fertigungsaufwände (Bohren von Hydraulikflüssigkeitskanälen im Getriebegehäuse) eingespart werden können.

Ein weiterer Vorteil ist die direkte und somit kurze Hydraulikflüssigkeitsführung (Ölführung), welche zu einem Schaltzeitgewinn und somit zu einem Systemvorteil führt.

Weiter bietet diese Anordnung Vorteilhafterweise die Möglichkeit, die Ansteuereinheit und die Kupplungseinheit vorzumontieren und die gesamte Anordnung als Modul (eventuell komplett funktionsgeprüft) an den Getriebehersteller zu liefern.

Es ist vorgesehen, dass die Ansteuereinheit Aktuatoren für eine hydraulische Versorgung von einem oder mehreren Druckräumen der Doppelkupplung für die Betätigung der Doppelkupplung umfasst. Bei derartigen Aktuatoren handelt es sich üblicherweise um Elektromagnetventile entsprechend den in der DE 199 21 687 A1 beschriebenen. Es können jedoch auch Hydraulikschieber oder dergleichen mit zugehörigen elektrischen und/oder mechanischen, insbesondere hydraulischen Komponenten eingesetzt sein. Auch hier ergibt sich der Vorteil kurzer hydraulischer Förderwege.

Weiter ist erfindungsgemäß vorgesehen, dass die Ansteuereinheit Aktuatoren für eine hydraulische Versorgung von einem oder mehreren Ausgleichsräumen der Doppelkupplung umfasst. Derartige Ausgleichsräume werden vorgesehen, um unerwünschten Druckerhöhungen in den Druckräumen mit zunehmender Rotationsbewegung der Doppelkupplung zu begegnen. Ein Beispiel für eine Kupplung mit Ausgleichraum entnimmt man insbesondere der EP 1 382 875 A1.

Handelt es sich wie bei den in der DE 199 21 687 A1 oder der EP 1 195 537 B1 Doppelkupplungen um nasslaufende (Lamellen-) Kupplungen so ist erfindungsgemäß vorgesehen, dass die Ansteuereinheit auch Aktuatoren für eine hydraulische Versorgung einer Kühlungseinrichtung der Doppelkupplung zur Kühlung aneinander reibender Elemente, wie z.B. der Reiblamellen der jeweiligen Kupplung, umfasst. Es ergibt sich wie oben der Vorteil kurzer hydraulischer Förderwege.

Es ist erforderlich, dass die Hydraulikflüssigkeit für die Versorgung der Kupplung, insbesondere der Kupplungsaktuatorik sowie der Kupplungskühlung, mit einem gewissen Mindestdruck zur Verfügung steht. Das entsprechende Druckniveau bzw. die entsprechenden Druckniveaus werden mit Hilfe einer oder mehrerer Hydropumpen erzeugt. Erfindungsgemäß ist daher vorgesehen, dass die Ansteuereinheit wenigstens eine dieser erforderlichen Hydropumpen umfasst. Es versteht sich für den Fachmann von selbst, dass auch die zur Regelung des entsprechenden Druckniveaus erforderliche Regeleinrichtung, üblicherweise ein Druckregelventil mit zugehöriger Ansteuerelektronik, in die Ansteuereinheit integriert sein kann. Auf diese Weise kann ein vollständig autark betreibbares Komplettmodul hergestellt werden.

Eine besonders vorteilhafte Ausführungsvariante der Erfindung sieht eine Hydraulikflüssigkeitsübergabeeinrichtung (Oilsleeve) vor, über welche die Doppelkupplung mit Hydraulikflüssigkeit versorgt wird.

Die Integration einer derartigen Hydraulikflüssigkeitsübergabeeinrichtung kann auf wenigstens zwei vorteilhafte Arten erfolgen:

Bei einer ersten Ausführungsvariante ist vorgesehen, dass die Doppelkupplung eine Kupplungsnabe aufweist, welche in der Hydraulikflüssigkeitsübergabeeinrichtung steckt und über welche die von der Ansteuereinheit gelieferten Hydraulikflüssigkeitsvolumina in die Doppelkupplung, insbesondere zu den Druckräumen und/oder zu den Ausgleichsräumen und/oder zu der Kühlungseinrichtung geführt werden. Diese Kupplungsnabe wird ebenso wie die Kupplung angetrieben. Eine Doppelkupplung mit Kupplungsnabe entnimmt man z.B. der Veröffentlichung über das DSG-Getriebe von VW in der Zeitschrift ATZ von 11/2003.

Eine Alternativvariante einer Antriebseinrichtung besteht darin, dass eine Durchführung vorgesehen ist, auf welcher die Doppelkupplung drehbar gelagert ist und welche in der Hydraulikflüssigkeitsübergabeeinrichtung steckt und über welche die von der Ansteuereinheit gelieferten Hydraulikflüssigkeitsvolumina in die Doppelkupplung, insbesondere zu den Druckräumen und/oder zu den Ausgleichsräumen und/oder zu der Kühlungseinrichtung geführt werden. Eine Doppelkupplung mit Durchführung (stehendem "Support") entnimmt man z.B. der europäischen Patentanmeldung No. 04 004484.4, der europäischen Patentschrift EP 1 195 537 B1 sowie der Offenlegungsschrift DE 199 21 687 A1.

Die Durchführung kann mit der Hydraulikflüssigkeitsübergabeeinrichtung verschraubt sein, sie kann jedoch auch an die Hydraulikflüssigkeitsübergabeeinrichtung angeformt sein.

Erfindungsgemäß kann weiter vorgesehen sein, dass die Ansteuereinheit und die Doppelkupplung ggf. mit Hydraulikflüssigkeitsübergabeeinrichtung/Kupplungsnabe bzw. Hydraulikflüssigkeitsübergabeeinrichtung/stehendem Support in einem Getriebegehäuse angeordnet sind. Diese Maßnahme eröffnet die Möglichkeit, die Ansteuereinheit und die Kupplungseinheit (mit Oilsleeve/Nabe bzw. Oilsleeve/Support) in der Getriebegehäuseglocke vorzumontieren. Dadurch kann die gesamte Anordnung als Modul vollständig getestet und als solche für den Kompletteinbau in ein Getriebe vorbereitet werden.

Minimalen Bauraumbedarf erhält man dann, wenn die Doppelkupplung in ihrem rotierenden Kupplungsgehäuse direkt zur die Ansteuereinheit benachbart ist und keine weiteren Bauteile diese Baugruppen beabstanden.

Zwei Ausführungsbeispiele der Erfindung sind in der Zeichnung dargestellt. Es zeigen:
- Figur 1: ein erstes Ausführungsbeispiel einer erfindungsgemäßen Antriebseinrichtung mit rotierender Kupplungsnabe
- Figur 2: ein zweites Ausführungsbeispiel einer erfindungsgemäßen Antriebseinrichtung mit stehendem Support

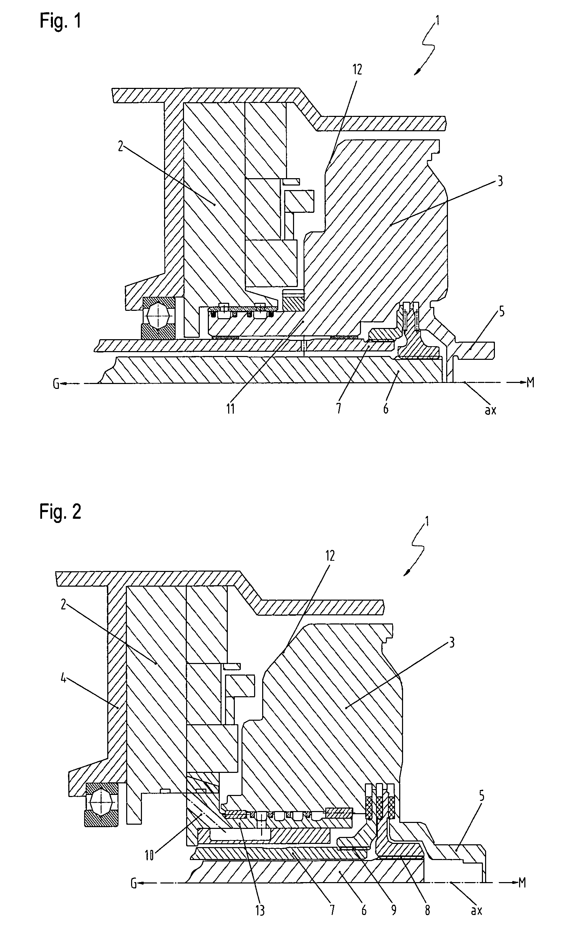

Die Figur 1 zeigt ein erstes Ausführungsbeispiel einer erfindungsgemäßen Antriebseinrichtung 1. Diese Antriebseinrichtung 1 weist als wesentliche Komponenten eine von einem nicht dargestellten Motor M antreibbare Antriebswelle 5 und zwei koaxial zu dieser Antriebswelle 5 angeordnete Getriebeeingangswellen 6, 7 auf, welche auf ein ebenfalls nicht dargestelltes Getriebe G geführt sind. Weitere Bestandteile sind eine hydraulisch ansteuerbare Doppelkupplung 3 sowie eine zur Ansteuerung dieser Doppelkupplung 3 erforderliche elektro-hydraulische Ansteuereinheit 2. Die Doppelkupplung 3 ist in der Lage, die Antriebswelle 5 schaltbar mit wenigstens einer der Getriebeeingangswellen 6, 7 zu verbinden.

Bei dem Ausführungsbeispiel ist die Doppelkupplung 3 sehr ähnlich wie die in der EP 1 195 537 B1 beschriebene Doppelkupplung ausgeführt. Insbesondere ist die Antriebswelle 5 im Wesentlichen drehfest mit einem Kupplungsgehäuse 12 der Doppelkupplung 3 verbunden. Dieses Kupplungsgehäuse bzw. diese Kupplungsglocke 12 ist drehfest mit einer Kupplungsnabe 11 verbunden, mit welcher hier nicht dargestellte Innenlamellenträger der einzelnen Kupplungen der Doppelkupplung ebenfalls drehfest verbunden sind. Die ebenfalls hier nicht dargestellten Außenlamellenträger der jeweiligen Kupplungen sind über entsprechende Steckverzahnungen 8, 9 mit den beiden Getriebeeingangswellen 6, 7 verbunden, von denen die eine Getriebeeingangswelle 7 eine Hohlwelle ist und die andere als Vollwelle ausgebildete Getriebeeingangswelle 6 koaxial zur gemeinsamen Drehachse ax umgreift.

Die Tatsache, dass die Doppelkupplung im Einzelnen nicht dargestellt ist, soll verdeutlichen, dass der Aufbau der Doppelkupplung als solcher für die Erfindung nicht wesentlich ist. Insbesondere ist es unerheblich, ob eine der beiden Kupplungen die andere koaxial umgreift oder ob die beiden Einzelkupplungen der Doppelkupplung in Achsrichtung ax nebeneinander angeordnet sind.

Die Kupplungsnabe 11 steckt in einer Hydraulikflüssigkeitsübergabeeinrichtung 10, einem sogenannten Oilsleeve. Dieser an sich bekannte Oilsleeve weist Anschlüsse für diverse Hydraulikflüssigkeitsversorgungseinrichtungen auf. Diese Anschlüsse führen zu Kanälen in der Hydraulikflüssigkeitsübergabeeinrichtung 10, welche im Wesentlichen in radialer Richtung verlaufen. Diese im Wesentlichen in radialer Richtung verlaufenden Hydraulikflüssigkeitskanäle sind mit den im Wesentlichen in axialer Richtung verlaufenden Hydraulikflüssigkeitskanälen in der Kupplungsnabe 11 verbunden, welche eine Verbindung zu entsprechenden Volumina in der Doppelkupplung 3 herstellen.

Eine derartig ausgebildete Kupplungsnabe 11 ist an sich bekannt. Es versteht sich daher für den Fachmann von selbst, dass diese Kupplungsnabe 11 als solche auch mehrteilig ausgeführt sein kann. Insbesondere kann ein Teil der Kupplungsnabe 11 in der Art eines Rohrs ausgeführt sein, in deren Mantel im Wesentlichen in axialer Richtung verlaufende Kanäle eingeformt oder eingefräst sind und ein anderer Teil als hülsenförmiger Körper, welcher über dieses rohrförmige Teil geschoben ist und mit diesem in der Art einer Presspassung verbunden ist.

Diese Kupplungsnabe 11 umgreift im vorliegenden Ausführungsbeispiel die beiden Getriebeeingangswellen 6, 7 und ist auf der äußeren dieser beiden Getriebeeingangswellen 7 drehbar gelagert.

In erfindungsgemäßer Weise ist bei dieser Antriebseinrichtung 1 die Ansteuereinheit 2 axial benachbart zu der Doppelkupplung 3 angeordnet. Die Ansteuereinheit 2 umfasst Aktuatoren für die hydraulische Betätigung der Doppelkupplung 3, Aktuatoren, welche einen Hydraulikflüssigkeitsfluss zu Ausgleichsräumen der Doppelkupplung 3 zulassen, sowie Aktuatoren, welche einen Hydraulikflüssigkeitsfluss in das Innere der Doppelkupplung 3 ermöglichen, um die Reiblamellen und sonstige aneinander reibenden Elemente zu kühlen. Damit zusammenhängend können diese Aktuatoren auch dazu vorgesehen sein, einen Hydraulikflüssigkeitsfluss zur Schmierung von reibungsarm beweglichen Elementen der Doppelkupplung 3 zu ermöglichen. Selbstverständlich können hierfür auch separate Aktuatoren vorgesehen sein. Zu schmierende Elemente sind beispielsweise jegliche Art von Lagern. Darüber hinaus können auch Gleitelemente eines etwaig im Kupplungsgehäuse 12 vorhandenen Torsionsschwingungsdämpfers der Schmierung bedürfen.

Die Figur 2 zeigt ein zweites Ausführungsbeispiel einer erfindungsgemäßen Antriebseinrichtung 1. Identisch wie im Ausführungsbeispiel gemäß der Figur 1 vorhandene Bauteile sind mit gleichen Bezugszeichen versehen.

Diese Antriebseinrichtung 1 gemäß der Figur 2 unterscheidet sich von der gemäß von der Figur 1 dadurch, dass anstelle einer auf der äußeren Getriebeeingangswelle 7 gelagerten Kupplungsnabe 11 ein sogenannter stehender Support 13 vorgesehen ist, auf welcher die Kupplung gelagert ist. Beispiele für Kupplungen mit stehendem Support entnimmt man z. B. der europäischen Patentanmeldung No. 03 023 013.0.

Anders als beim vorstehend beschriebenen Ausführungsbeispiel befinden sich die Hydraulikzuführungskanäle nicht in der Kupplungsnabe sondern in diesem stehenden Support. Die Hydraulikflüssigkeitsübergabeeinrichtung 10 (Oilsleeve) ist an den stehenden Support 13 angeformt bzw. angeschraubt. Die elektro-hydraulische Ansteuereinheit 2 ist mit dieser Hydraulikflüssigkeitsübergabeeinrichtung 10 drehfest verbunden.

Auch in diesem Ausführungsbeispiel befindet sich die Ansteuereinheit 2 axial benachbart zur Kupplungsglocke 12. Ansteuereinheit 2 und Kupplungsglocke 12 werden von einem Getriebegehäuse 4 außenumfangsseitig umgriffen.

### Bezugszeichenliste

- 1: Antriebseinrichtung
- 2: elektro-hydraulische Ansteuereinheit
- 3: Doppelkupplung
- 4: Getriebegehäuse
- 5: Antriebswelle
- 6: erste Getriebeeingangswelle (Vollwelle)
- 7: zweite Getriebeeingangswelle (Hohlwelle)
- 8: Steckverzahnung als Verbindung zu erster Kupplung
- 9: Steckverzahnung als Verbindung zu zweiter Kupplung
- 10: Hydraulikflüssigkeitsübergabeeinrichtung
- 11: Kupplungsnabe
- 12: Kupplungsglocke
- 13: Durchführung

- ax: Drehachse
- G: Getriebe
- M: Motor

## Patentansprüche

1. Antriebseinrichtung (1)
- mit einer Antriebswelle (5),
- mit zwei koaxial zu der Antriebswelle (5) angeordneten Getriebeeingangswellen (6, 7) eines Getriebes (G) und
- mit einer mittels einer elektro-hydraulischen Ansteuereinheit (2) hydraulisch ansteuerbaren Doppelkupplung (3), mit welcher die Antriebswelle (5) schaltbar mit wenigstens einer der Getriebeeingangswellen (6, 7) verbindbar ist,
**dadurch gekennzeichnet, dass**
- die Ansteuereinheit (2) axial benachbart zu der Doppelkupplung (3) angeordnet ist.

2. Antriebseinrichtung (1) nach Anspruch 1,
**dadurch gekennzeichnet, dass**
die Ansteuereinheit (2) Aktuatoren für eine hydraulische Versorgung von einem oder mehreren Druckräumen der Doppelkupplung (3) für die Betätigung der Doppelkupplung (3) umfasst.

3. Antriebseinrichtung (1) nach Anspruch 1 oder 2,
**dadurch gekennzeichnet, dass**
die Ansteuereinheit (2) Aktuatoren für eine hydraulische Versorgung von einem oder mehreren Ausgleichsräumen der Doppelkupplung (3) umfasst.

4. Antriebseinrichtung (1) nach Anspruch 1, 2 oder 3,
**dadurch gekennzeichnet, dass**
die Ansteuereinheit (2) Aktuatoren für eine hydraulische Versorgung einer Kühlungseinrichtung der Doppelkupplung (3) zur Kühlung aneinander reibender Elemente in der Doppelkupplung (3) umfasst.

5. Antriebseinrichtung (1) nach einem der vorangegangenen Ansprüche,
**dadurch gekennzeichnet, dass**
die Ansteuereinheit (2) wenigstens eine Hydropumpe umfasst.

6. Antriebseinrichtung (1) nach einem der vorangegangenen Ansprüche,
**dadurch gekennzeichnet, dass**
eine Hydraulikflüssigkeitsübergabeeinrichtung (10) vorgesehen ist, über welche die Doppelkupplung (3) mit Hydraulikflüssigkeit versorgt wird.

7. Antriebseinrichtung (1) nach einem der vorangegangenen Ansprüche,
**dadurch gekennzeichnet, dass**
die Doppelkupplung (3) eine Kupplungsnabe (11) aufweist, welche in der Hydraulikflüssigkeitsübergabeeinrichtung (10) steckt und über welche die von der Ansteuereinheit (2) gelieferten Hydraulikflüssigkeitsvolumina in die Doppelkupplung (3), insbesondere zu den Druckräumen und/oder zu den Ausgleichsräumen und/oder zu der Kühlungseinrichtung geführt werden.

8. Antriebseinrichtung (1) nach einem der Ansprüche 1 bis 6,
**dadurch gekennzeichnet, dass**
eine Durchführung (13) vorgesehen ist, auf welcher die Doppelkupplung (3) drehbar gelagert ist und welche in der Hydraulikflüssigkeitsübergabeeinrichtung (10) steckt und über welche die von der Ansteuereinheit (2) gelieferten Hydraulikflüssigkeitsvolumina in die Doppelkupplung (3), insbesondere zu den Druckräumen und/oder zu den Ausgleichsräumen und/oder zu der Kühlungseinrichtung geführt werden.

9. Antriebseinrichtung (1) nach Anspruch 8,
**dadurch gekennzeichnet, dass**
die Durchführung (13) mit der Hydraulikflüssigkeitsübergabeeinrichtung (10) verschraubt ist oder dass die Durchführung (13) an die Hydraulikflüssigkeitsübergabeeinrichtung (10) angeformt ist.

10. Antriebseinrichtung (1) nach einem der vorangegangenen Ansprüche,
**dadurch gekennzeichnet, dass**
die Ansteuereinheit (2) und die Doppelkupplung (3) in einem Getriebegehäuse (4) angeordnet sind.

11. Antriebseinrichtung (1) nach einem der vorangegangenen Ansprüche,
**dadurch gekennzeichnet, dass**
die Ansteuereinheit (2) und die Doppelkupplung (3) lediglich durch ein die Doppelkupplung (3) aufnehmendes Kupplungsgehäuse (12) beabstandet sind.
